# EUROPEAN PATENT APPLICATION

(11) **EP 1 455 179 A1**
(43) Date of publication of application: **08.09.2004**
(21) Application number: 03394024.8
(22) Date of filing: 07.03.2003
(51) Int. Cl.: G01N 21/88

(54) **A machine vision inspection system and method**

(71) Applicant: MV Research Limited, Dublin 18 (IE)
(72) Inventor: Mahon, James, Dublin 9 (IE); Wall, John, Dublin 13 (IE); Tracey, James, Dublin 5 (IE); Dullaghan, Mark, Trim, County Meath (IE); Doherty, Sean, Blackrock, County Dublin (IE)
(74) Representative: Weldon, Michael James

(57) **Abstract**

A machine vision system has an illumination head 1 with seven rings of LEDs 2-8, each having a different elevational angle. Each ring is configured with a particular current level, thereby setting its intensity. Rings 3 and 4 are green and blue, the other rings being red. A controller controls illumination by varying one or a combination of elevation, azimuth quadrant (or 45° octant), intensity, and colour. Multiple images of a scene are combined to construct a model.

## Description

### Introduction

The invention relates to machine vision inspection.

In recent years the demands on machine vision inspection machines have increased because of ever-increasing circuit component density, miniaturisation, and production line throughput rates. It has become particularly difficult to consistently accurately inspect solder joints because of the ever-decreasing size of the solder deposits (pre and post reflow) and the fact that the field of view is often partially blocked by neighbouring components.

Also, in many instances the profile or contour (shape) of a solder joint or other deposit is very important for operation of the circuit in the field. Existing machine vision systems and methods fail to provide adequate information concerning the profiles.

Our prior published PCT Patent Specification No. WO01/29542 describes capture of multiple images of a particular scene, each image being at the same elevation but different colour.

### Statements of Invention

According to the invention, there is provided a machine vision inspection system comprising:
a camera mounted with its axis normal to a scene to be inspected;
an illuminator;
an image processor connected to the camera;
a controller for directing acquisition of a plurality of images of a single scene by the camera and the image processor, in which the controller directs a different illumination for each image.

In one embodiment, the controller controls azimuth angle of illumination.

In another embodiment, the illuminator comprises light sources mounted around the normal axis and a driver for illuminating light sources for only a particular range of azimuth angles for an image.

In a further embodiment, the controller directs illumination by light sources in one or more azimuth sectors.

In one embodiment, the controller directs simultaneous activation of light sources of diagonally opposed azimuth sectors for acquisition of an image.

In another embodiment, the controller controls elevational angle of illumination.

In a further embodiment, there are a plurality of rings of light sources, each illuminating at a different elevation.

In one embodiment, the controller directs activation of only a subset of light sources in an azimuth sector for an image.

In another embodiment, at least one ring has LEDs of a different colour, and the controller controls illumination at least partly on the basis of colour.

In a further embodiment, the controller activates light sources of different colours simultaneously for diffuse illumination.

In one embodiment, the controller drives some light sources with a different intensity from other light sources.

In another embodiment, the controller drives different light source rings with different intensities.

In a further embodiment, the controller controls illumination on the basis of one or a combination of light source elevation, azimuth, intensity, and colour for each of a plurality of images of a scene.

In one embodiment, the image processor constructs a model of the scene using a plurality of acquired images.

In another embodiment, the image processor generates a display in which data from each image is distinguished on the basis of colour.

### Detailed Description of the Invention

The invention will be more clearly understood from the following description of some embodiments thereof, given by way of example only with reference to the accompanying drawings in which:-
Fig. 1 is a cross-sectional elevational view of an illumination head of a machine vision system of the invention, and Fig. 2 is a perspective view;
Figs. 3 and 4 are plan and perspective views of a lower part of the head;
Figs. 5(a) to 5(f) are diagrammatic representations of six possible illumination scenarios; and
Figs. 6(a), 6(b), and 6(c) are sample system output images; and
Fig. 7 is a perspective and underneath plan view of an alternative head of the invention.

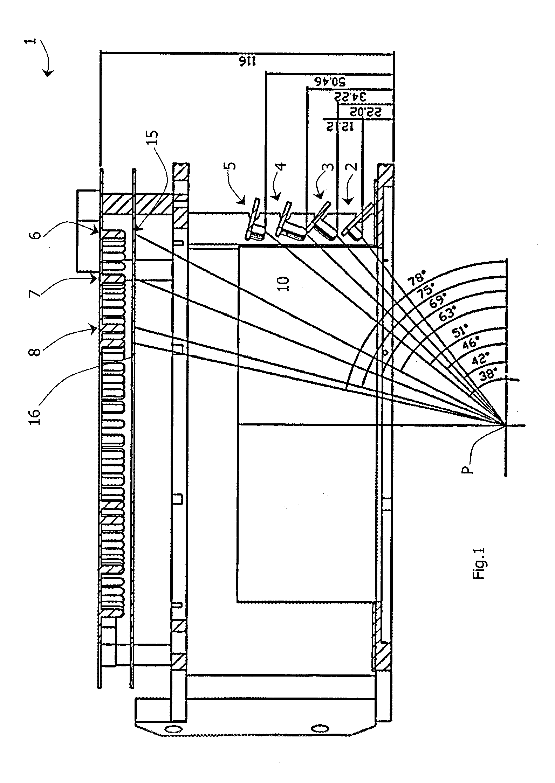

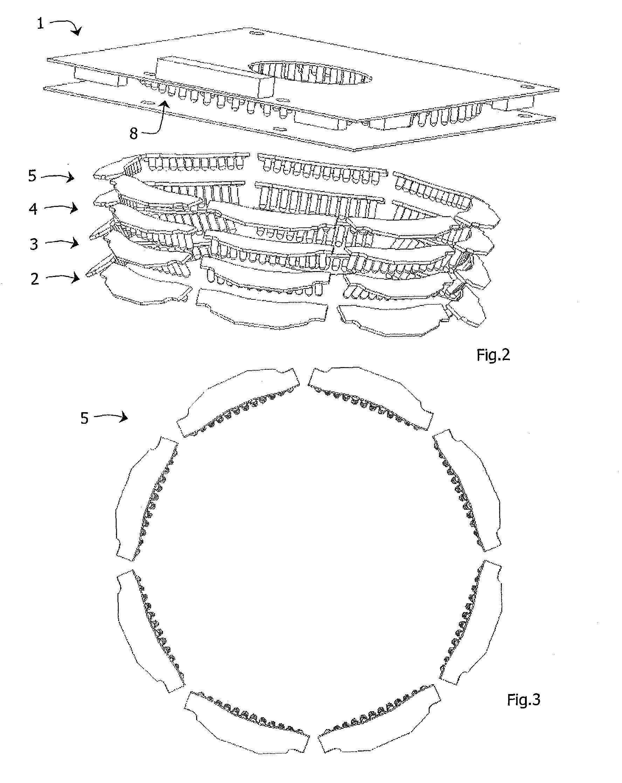

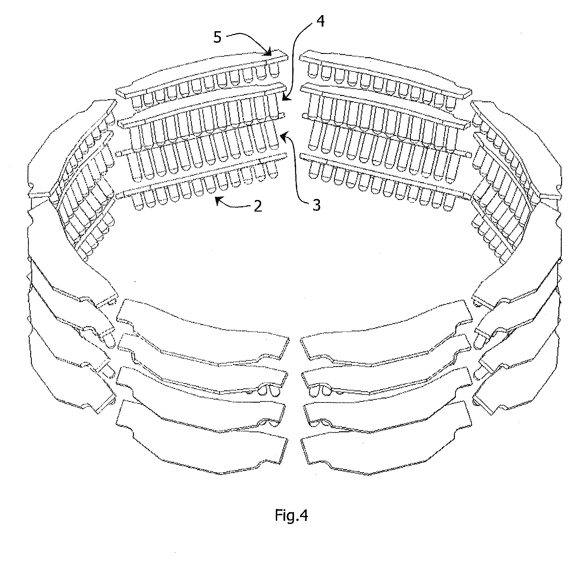

A machine vision system of the invention comprises a CCD camera mounted on-axis (normal to the scene, denoted "Z") and an illumination head 1 shown in Figs. 1 to 4.

The head 1 comprises, in succession vertically,
a 38° ring of LEDs 2 of colour red,
a 42° ring of LEDs 3 of colour green,
a 46° ring of LEDs 4 of colour blue, and
a 51° ring of LEDs 5 of colour red.

The rings of LEDs 2-5 are arranged one above the other in the Z direction with the same diameter. A diffuser 10 is provided to achieve a flat field illumination of an area of the scene which is larger than the camera field of view.

The head 1 also comprises three rings of LEDs 6, 7, and 8 at the same Z level and co-centric. The details are:
ring 6 is 63° and has colour red,
ring 7 is 75° and has colour red, and
ring 8 is 78° and has colour red.

Light from the LEDs 6, 7, and 8 is directed by a Fresnel lens 15 having a central aperture 16 to provide a camera field of view of the scene under inspection. The Fresnel lens 15 allows the LEDs 6, 7, and 8 to illuminate uniformly across the illuminated area of the scene.

In the diagrams each ring 2-8 is only one LED wide, however, they may be two or more wide depending on the application. Where there are multiple rows in each ring, the LEDs are preferably offset with respect to the LEDs of the next row.

The drive circuits for the LEDs are arranged so that they can individually illuminate one or more 45° sectors (octants) as viewed in underneath plan. Additionally, the LEDs can be driven in individual subsets of sectors, each subset having some or all LEDs from one, two, three, or four of the rings 2-8. Adjoining octants may be simultaneously activated to provide quadrant lighting.

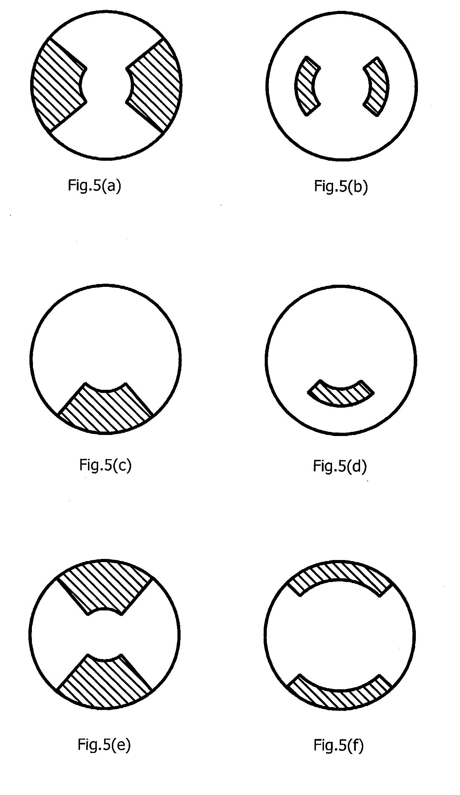

Referring to Figs. 5(a) to 5(f) some example illumination scenarios are shown diagrammatically in underneath plan view:
Fig. 5(a): two adjoining 45° sectors on each of "East" and "West" sides, forming full "East" and "West" quadrants;
Fig. 5(b): in each of the "East" and "West" quadrants only two adjacent rings being activated;
Fig. 5(c): a full "South" quadrant activated;
Fig. 5(d): only part of the "South" quadrant activated;
Fig. 5(e): both "North" and "South" quadrants activated;
Fig. 5(f): only smaller-angle rings of the "North" and "South" quadrants activated.

While the circuits are arranged for illumination in 45° sectors, the basic unit is a 90° "North", "South", "East", or "West" quadrant. However, the benefit of having a 45° sub-divisions is that the North-South axis can be "rotated" by 45° if the scene so requires. Also, this allows rotated components to be imaged correctly.

Each LED ring 2-8 has a configurable current value, setting the intensity. Thus, for any inspection or batch of inspections the controller can set a desired intensity level for each ring.

Thus, the head 1 allows illumination control on the basis of varying one or a combination of:
(a) Elevation, by choosing a ring or rings 2-8 having the desired elevational angle (38°, 42°, 46°, 51°, 63°, 75°, and 78°).
(b) Azimuth, by choosing which octant(s) or quadrant(s) to activate.
(c) Intensity, by setting a current value on the lighting controller.
(d) Colour by choosing red (LEDs 2, 5, 6, 7, and/or 8), green (LEDs 3), and/or blue (LEDs 4).

Therefore, there is excellent versatility in the illumination arrangement for optimum image acquisition in any particular situation. The head is particularly suitable for post-reflow solder joint inspection. The richness of the data which can be extracted from the scene allows accurate object (e.g. solder or component shape) to be reconstructed.

### Example 1

The camera captures six images of a particular group of solder joints as follows.
Image 1: "Top" illumination from the red LEDs 6 and 7 ( full rings ).
Image 2: "North" quadrant illumination using some LEDs from each ring 2-8 (combination of red, green, and blue or just a single colour).
Image 3: "South" quadrant illumination using some LEDs from each ring 2-8 (combination of red, green, and blue or just a single colour).
Image 4: "East" quadrant illumination using some LEDs from each ring 2-8 (combination of red, green, and blue or just a single colour).
Image 5: "West" quadrant illumination using some LEDs from each ring 2-8 (combination of red, green, and blue or just a single colour).
Image 6: "High" illumination from the red LEDs 8 only.

The image processor uses the six images to reconstruct the shape of the scene. The sum of the information from all six images is greater than that of only one image captured with illumination from all sides. Illumination from only one side across a range of angles in a Z plane provides information on the contour. For example, it indicates if a solder joint is concave or convex on one side.

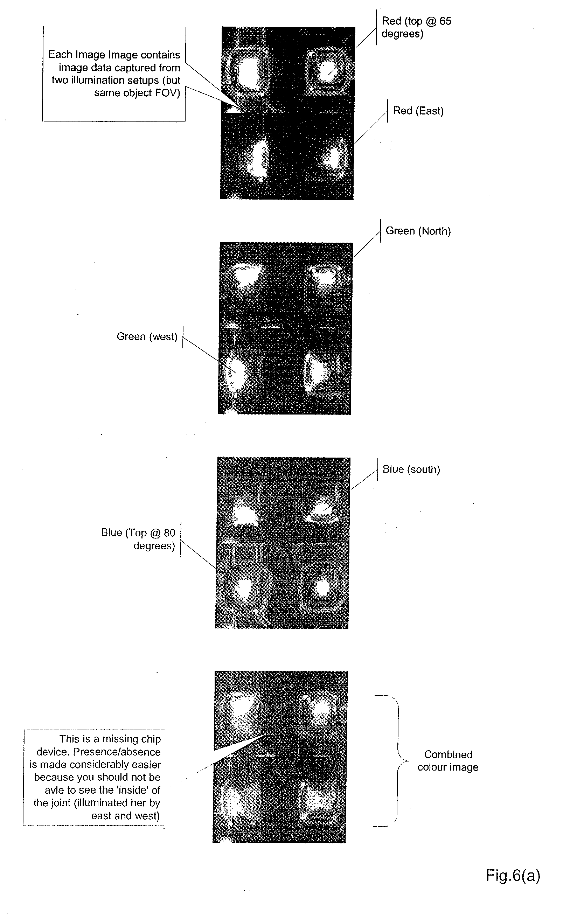

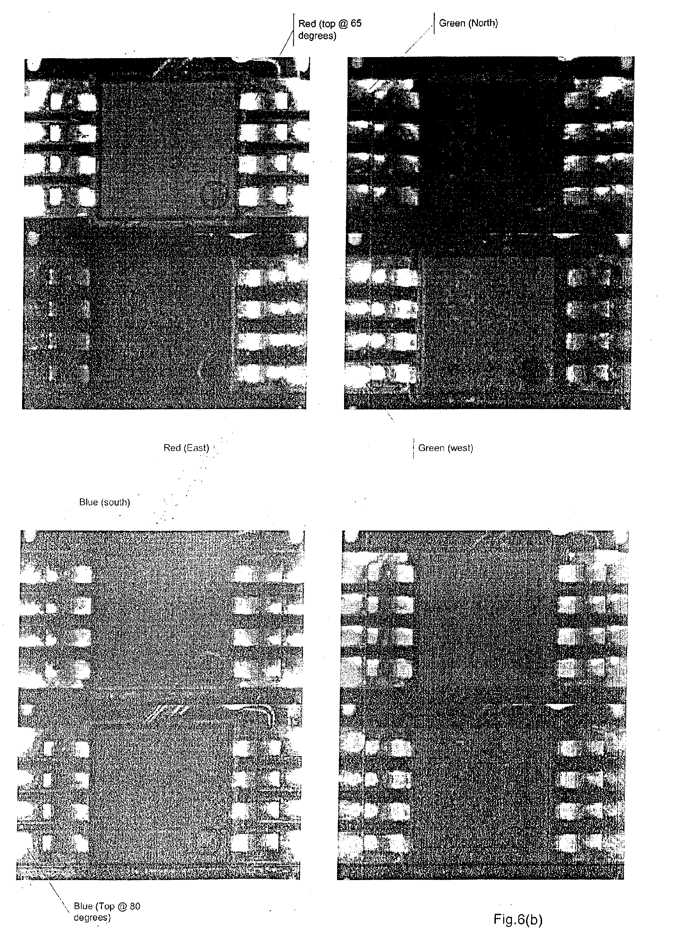

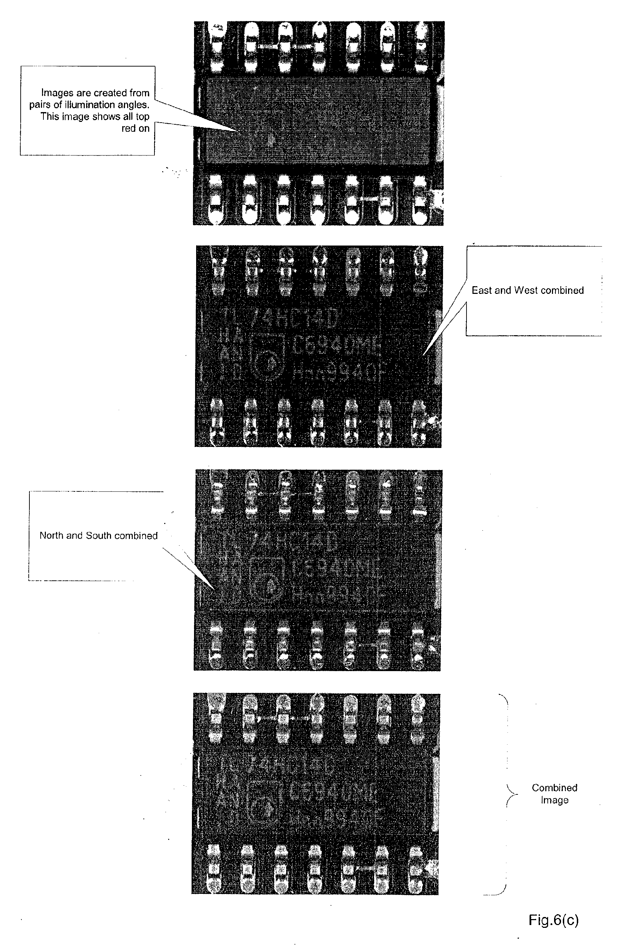

Referring to Fig. 6(a) a solder joint is inspected by capturing six images: display colour red from top (63°, LEDs 6), display colour red East (38°, LEDs 2), display colour green north (38°, LEDs 2), display colour green West (38°, LEDs 2), display colour blue (38°, LEDs 2), and display colour blue (top, 78°, LEDs 8). The lower image of Fig. 6(a) is a combined colour image captured with all LEDs activated. The images have 6 planes and it is difficult to display such images. However, it is simple to display three plane images as "colour" images. To display six planes, the system displays two colour images ( one above the other ).

It must be noted that these colours are display colours, not related to the LED colours. The different display colours allow users to easily differentiate illumination scenarios.

Fig. 6(b) shows sample images of another scene with a similar illumination sequence as for Fig. 6(a).

Fig. 6(c) shows three images: illumination top with all LEDs 6, 7, and 8; illumination from east and west with LEDs 2; and illumination from north and south with LEDs 2.

The system generates displays for the process engineer in which a different display colour is used for each image 1-5. The display colours are not linked with the illumination colours. They are only used to distinguish for the process engineer one image from another. Thus a "North" facing joint shoulder will be displayed primarily with the colour associated with Image 1. However another colour for part of this shoulder tells the trained engineer much about its profile.

The inspection method may be used to selectively carry out further inspection of failed joints. Such inspection may be carried out at a repair station, giving a comprehensive "reconstruction" view of a failed joint before repair. The repair station may have a stereo viewing headset or lenticular display giving a 3D view of the joints. The user could "rotate" the solder joint in three dimensions for easier viewing of the solvent features. Rotation is effected by successively driving each sector in turn.

It will be appreciated that the invention allows a comprehensive assessment of joint quality to be made, with more accurate classification of errors.

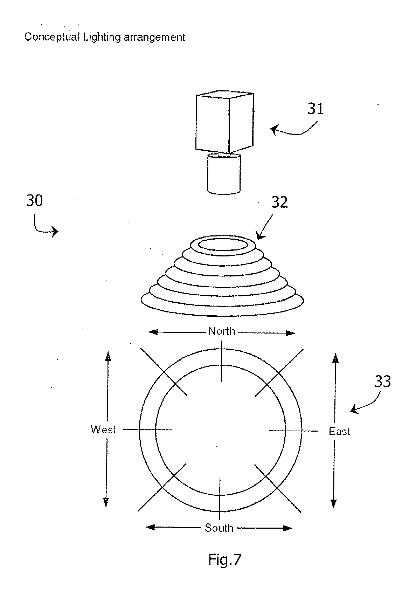

The invention is not limited to the embodiments described but may be varied in construction and detail. For example, the angles of the LED rings may be different from those described. Indeed, the LEDs may be arranged in an array, possibly domed, inserted of in rings. Also, the LED arrangement may be different. An alternative example is shown in Fig. 7, in which a camera 31 captures images with illumination from one or more concentric rings 32 with an overall conical configuration with gradually increasing diameter downwards. It is also envisaged that the colour and intensity control may be on a basis other than rings, such as vertical plane rows spanning multiple elevations.

## Claims

1. A machine vision inspection system comprising:
a camera mounted with its axis normal to a scene to be inspected;
an illuminator;
an image processor connected to the camera;
a controller for directing acquisition of a plurality of images of a single scene by the camera and the image processor, in which the controller directs a different illumination for each image.

2. A system as claimed in claim 1, wherein the controller controls azimuth angle of illumination.

3. A system as claimed in claim 2, wherein the illuminator comprises light sources mounted around the normal axis and a driver for illuminating light sources for only a particular range of azimuth angles for an image.

4. A system as claimed in claim 2 or 3, wherein the controller directs illumination by light sources in one or more azimuth sectors.

5. A system as claimed in claim 4, wherein the controller directs simultaneous activation of light sources of diagonally opposed azimuth sectors for acquisition of an image.

6. A system as claimed in any preceding claim, wherein the controller controls elevational angle of illumination.

7. A system as claimed in claim 6, wherein there are a plurality of rings of light sources, each illuminating at a different elevation.

8. A system as claimed in claim 7, wherein the controller directs activation of only a subset of light sources in an azimuth sector for an image.

9. A system as claimed in claim 7 or 8, wherein at least one ring has LEDs of a different colour, and the controller controls illumination at least partly on the basis of colour.

10. A system as claimed in claim 9, wherein the controller activates light sources of different colours simultaneously for diffuse illumination.

11. A system as claimed in claim 7 to 10, wherein the controller drives some light sources with a different intensity from other light sources.

12. A system as claimed in claim 11, wherein the controller drives different light source rings with different intensities.

13. A system as claimed in any preceding claim, wherein the controller controls illumination on the basis of one or a combination of light source elevation, azimuth, intensity, and colour for each of a plurality of images of a scene.

14. A system as claimed in any preceding claim, wherein the image processor constructs a model of the scene using a plurality of acquired images.

15. A system as claimed in claim 14, wherein the image processor generates a display in which data from each image is distinguished on the basis of colour.
